# EUROPEAN PATENT APPLICATION

(11) **EP 3 502 980 A1**
(43) Date of publication of application: **26.06.2019**
(21) Application number: 17209520.0
(22) Date of filing: 21.12.2017
(51) Int. Cl.: G06Q 10/00, G06Q 10/06

(54) **COMMUNICATION SYSTEM, A METHOD OF COMMUNICATION AND A REFRIGERATOR**

(71) Applicant: Vestel Elektronik Sanayi ve Ticaret A.S., 45030 Manisa (TR)
(72) Inventor: KIRISKEN, BARBAROS, 45030 Manisa (TR)
(74) Representative: Beck Greener LLP

(57) **Abstract**

The invention provides a method of controlling an interaction between the two parties, at least one of which is an Al party, the method comprising: setting a threshold level for a predetermined factor relating to interaction between the two parties; during the interaction, monitoring the predetermined factor; and, when the threshold for the predetermined factor is exceeded, triggering an alarm for a human user. The invention also provides an Al communication method and refrigerator utilising the method.

## Description

The present invention relates to an artificial intelligence (AI) communication system and a method of AI communication.

Al to Al communication is a kind of machine to machine (M2M) interaction, typically done without human interruption. With the growth of the Internet of Things Al is an important tool in enabling the development of associated technologies. However, unlike M2M interaction, where commands and responses are more definite and predefined, Al to Al (referred to as AI/AI or AI2AI) almost by definition can be largely unpredictable. This is not least because by definition the parties interacting are supposed in theory to have intelligence (artificial) and so the precise direction of an interaction can vary.

In a consumer application service, a chat bot, i.e. a computer program which conducts a conversation via auditory or textual methods, and which are preferably designed to convincingly simulate how a human would behave as a conversational partner, can communicate with a user AI for example in the management or processing of intelligent ordering. In an exemplary application an Al system integrated with say a refrigerator can try to replace ordinary user behaviour. For example it might function to estimate when milk will be finished and then, effectively of its own volition, start to order by interaction with a chat bot at the grocery or supermarket.

A problem occurs when two Al systems interact and the interaction somehow gets stuck. This can be for example due to an error or shortfall in the programming of one or both of the Al systems, which leads to an iterative loop of communication.

A number of systems are known that utilise AI. In US9386152 there is disclosed a system for a contact center including a processor; an interactive voice response (IVR) node configured to engage in an incoming interaction from a customer to the contact center by presenting set scripts to the customer and receiving corresponding responses; an intelligent automated agent including an artificial intelligence engine; a call server node configured to route the interaction and the responses to one of a pool of live agents or to the automated agent; and a non-transitory storage device coupled to the processor and configured to store customer profile data built from previous interactions. The automated agent is further configured to retrieve a profile of the customer from the customer profile data during the interaction and to update the retrieved profile on the storage device to reflect the interaction. The artificial intelligence engine is configured to learn knowledge from the interaction and to apply the learned knowledge to future interactions.

US2001/0047261 discloses a computer program that provides automated interactive technical support simulating the sort of support an actual human would provide, including a mechanism under which, under certain circumstances, a human being is able to intervene where necessary to supplement or substitute for the automated help. The system has an artificial intelligence engine that uses natural language processing to engage in unrestricted and automated dialogue with callers, modified essentially in that the computer is able to rate the dialogue and when the dialogue quality falls below a predetermined rating threshold, callers are automatically routed to human operators for further intervention and assistance.

US20090245500 discloses an artificial intelligence (AI)-assisted live agent chat system allows a single live agent to handle an increased number of simultaneous chat sessions by having an Al system handle the bulk of common, repeat questions. The Al system will allow the live agent to focus his or her attention on the few chat sessions needing unique service and will effectively lower the cost of supporting chat sessions. The server-side technology uses an AI-engine as well as a live agent backend interface for a site to deliver live-agent experience without the customer having to know whether the answer is from the Al system or from the live agent.

US8155959 discloses systems and methods that automatically control modules of dialog systems including a dialog module that receives and processes utterances from a speaker.

US20140122083 discloses a chat bot system and method utilising contextual input/output messages.

According to a first aspect of the present invention, there is provided a method of controlling an interaction between the two parties, wherein at least one of the parties is an Al system, the method comprising: setting a threshold level for a predetermined factor relating to interaction between the two parties; during the interaction, monitoring the predetermined factor; and, when the threshold for the predetermined factor is exceeded, triggering an alarm for a human user.

A method is provided by which communication between two parties, at least one of which is an Al party, can be used without the risk of lock out or infinite iterations in the event of errors since an alarm is triggered which can be used to alert a user to the problem in the communication.

Preferably, both parties are Al parties, such that the method is of communication between two AI parties and it can be used without the risk of lock out or infinite iterations in the event of errors since an alarm is triggered which can be used to alert a user to the problem in the AI/AI communication.

In an embodiment, the predetermined factor is the number of iterations in the conversation. It has been recognised that most "correct" conversations, i.e. conversations that comes to a proper or satisfactory conclusion that is between 2 AI parties rely on a limited number of iterations, i.e. a back and forth communication between the two parties. It has therefore been recognised by the applicant that this can be used to set a decision threshold into the process to avoid infinite iterative loops which a human user would not be aware of unless and until they realised, say by a manual check, that the conversation had not completed successfully.

In an embodiment, the human user is notified by the sending of a notification to the user. A notification is sent to a user which alerts them to the problem so that rather than wait until they make a specific manual check of the status of the communication or the AI systems, they are alerted very early in the process, i.e. shortly after the lock in communication has occurred. Given the speed of typical AI conversations and the fact that they are typically M2M communications the notification will typically be sent to a user almost at the same time as the breakdown in communication occurs.

In an embodiment, the notification is a message sent via a user's mobile telephone. Most humans carry around them with mobile telephones and many mobile telephones these days are internet enabled, i.e. smart phones, which means that automatic notification and communication to a human user is relatively straightforward to achieve.

In an embodiment, a social media App is used for communication with the user's mobile telephone. A non-limiting example would be WhatsApp.

In an embodiment, the notification includes an invitation to the user to participate in the interaction with one of the AI parties. Preferably the notification which can be sent via a social media platform contains an active link to enable a user to directly intervene in the conversation that has become locked or stuck in an infinite loop. For example, the message could contain an active link to a telephone number of one of the parties, such as a grocery store. This in turn means that as soon as the message is received the user can activate the link (e.g. by touching or clicking the link on his mobile telephone screen), and this will automatically connect him to a telephone to enable him to speak to the AI system at the second party, or indeed to a human operator at the second party, e.g. at the grocery store.

In an embodiment, the threshold number of iterations is determined based on a constant value added to an error.

In an embodiment, the constant value is 5 and the error is 2, such that the threshold is set to 7 iterations. A preferred number of iterations in an AI to AI conversation which triggers an alarm or a notification to a human user is 7 although other values could be used. Oher examples include anything from 5 to 12.

According to a second aspect of the present invention, there is provided an AI control system, comprising a processor arranged to monitor communications between a first system and a second system, wherein at least one of the systems is an AI system and wherein the processor is arranged, during the interaction, to monitor a predetermined factor relating to interaction between the two parties; and trigger an alarm for a human user when the threshold for the predetermined factor is exceeded.

In an embodiment, the predetermined factor relating to interaction between the two parties is the number of iterations in the conversation between the parties and in which the processor is arranged to trigger the alarm when the number of iterations exceeds the threshold.

In an embodiment, the AI control system comprises a communication module arranged upon receipt of instruction from the processor to send a notification to a user.

In an embodiment, the communication module comprises a mobile telephone or internet based communication module configured automatically to send a message via a social media App to alert a user to required intervention.

In an embodiment, the alarm includes an invitation to the user to participate in the interaction with one of the AI parties

In an embodiment, the predetermined factor is the number of iterations in a conversation between the AI parties and the threshold number of iterations is determined based on a constant value added to an error.

According to a third aspect of the present invention, there is provided a refrigerator, comprising therein an AI control system according to the second aspect of the present invention, arranged to communicate with a system such as an AI system at a third party such as a food retailer. Preferably the AI control system is integrated into the refrigerator's control systems. Alternatively it can be added as a discrete unit to an existing refrigerator which was not originally built with it as an integrated part.

This aspect provides a number of significant advantages. First, the incorporation of an AI system into a refrigerator means that the refrigerator can effectively of its own volition order supplies when a user is running low. This means that a user will not have to deal as often with the inconvenience of going to the refrigerator only to discover that they have run out of, say, milk. Second, the system will ensure that the communication between the refrigerator and the third party such as a retailer or grocer will end successfully and if it does not will alert a user to this very soon after the breakdown in communication occurs. The fact that a user is alerted to the breakdown means that he can intervene soon after the breakdown occurs and therefore again reduce the risk of the correct order not being received at the grocer.

Embodiments of the present invention will now be described in detail with reference to the accompanying drawings, in which:
Figure 1 is a flow diagram showing an example of a method of controlling an AI conversation;
Figures 2 to 5 are examples of AI/AI conversations; and
Figure 6 is a schematic block diagram showing a system for controlling an AI conversation

An AI communication system and method of AI communication is provided in which a threshold level for a parameter such as the number of iterations between two parties (at least one of which is an AI party) is determined and then, during the interaction, if the threshold level is exceeded, an alarm can be triggered to notify a human user. This provides a system and method by which communications such as AI to AI communications can be managed efficiently and with a significantly reduced (preferably totally avoided) risk of entering into a never ending iterative loop.

AI systems can now communicate with other AI systems for specific purposes including, for example, consumer purposes such as ordering goods in a refrigerator or some other fast moving consumer good. For example, a monitor could be provided within a refrigerator which notes when a certain item, such as milk, is needed and then automatically and of its own volition starts an interaction with an AI system at a retailer or other such institution. In the present system, the AI system defines an average number of questions and answers that are likely to be encountered with another AI system. In one non-limiting example, five iterations are defined for a correct order of a staple grocery such as milk. A single iteration may be thought of as including a single message going both ways. In other words it is two messages; one going from the first AI system to the second and then a response or message going from the second AI system to the first.

Preferably, a further margin is defined such as two further iterations and then a threshold is determined based on the sum of these two such that in this case the threshold will be seven.

The conversation starts as mentioned above, and will be undertaken purely between the two AI systems within the refrigerator and at the retailer. One or more of the AI systems may be a chat bot.

Once the threshold for a number of iterations is reached, the user AI system i.e. the one in the fridge, generates a warning or alarm to alert a human user that the conversation has been locked and will need some human interaction to unlock. A human will then intervene either directly or via some communications medium to give a correct or alternative answer to the step in the conversation that has locked and which will therefore enable the interaction to complete. Of course it could be the AI system at the retailer that generates the alarm instead or as well.

A number of detailed examples will be described below. In an alternative embodiment, instead of the threshold being set based purely on the number of AI iterations between two systems, some other parameter can be set as a threshold and used to determine when an alarm should be generated. In one alternative example, the threshold can be set as the number of negative answers. In other words, if one or more of the systems is noted to repeatedly be answering in the negative, then this can be an indication that the conversation has broken down in some way and therefore a user warning is triggered.

It is also possible that instead of the conversation being AI to AI, in an AI to human interaction, it could still be that the system breaks down and it is possible that the human involved either may not realise that this has happened or will need some further or alternative input from another human being.

In one example, after the locked conversation has been resolved by human interaction, it is preferred that the conversation reverts back to AI to AI and that the human then leaves the conversation. In one example, even when an alarm is not raised, a human can take over the role of one or both of the AI systems.

One further possible alternative feature is that the AI system can generate a summary for a user to indicate where the conversation is locked so that the user does not need to be made aware of all of the earlier stages of interaction in the conversation. All of these features are preferably provided in the current AI communication system and some detailed examples will now be described.

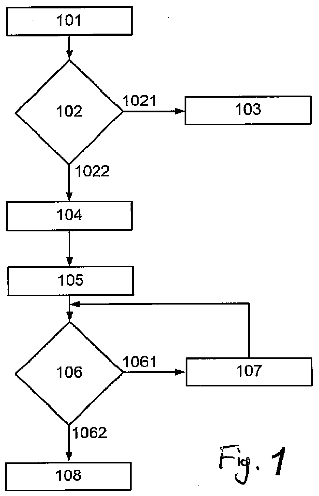

Figure 1 is a flow diagram showing an example of the structure of a conversation which could be an AI2AI conversation. The method includes a way of controlling an AI conversation. Initially, at step 101, the conversation starts. This could be generated by an AI system (which might be integrated into or arranged within a refrigerator) noting that stocks of a certain provision have fallen below a desired level and therefore that it is necessary to order some more. The AI system would then start a conversation with a further system which could be a further AI system, and the method would proceed.

In the general method of Figure 1, a conversation is started and at step 102, it is determined if the conversation that has been started is an AI to AI conversation. If it is, then the method proceeds at 102 to step 104 where the average number of iterations is determined. If it is not, then the conversation will merely proceed as a normal conversation between two humans or between an AI system and a human.

At step 105, the overflow margin is determined. In the general example given above, an overflow margin of two was provided. A threshold for number of iterations is set which is equal to the sum of the average number and a selected error value. Use of an error value reduces the risk of false positives in the identification of a locked conversation.

At step 106, having determined the conversation is proceeding, a determination is made as to whether or not the number of iterations exceeds the set threshold or not. If it does, the method proceeds via 1062 to step 108 where the AI conversation can be interrupted, e.g. after the triggering of an alarm. If the threshold is not exceeded, then the method proceeds to step 107 and cycles once more through the step 106.

At step 108, where it is indicated that the AI conversation is interrupted with human interaction, this could simply involve the triggering of an alarm to alert a human user to the fact that the threshold has been reached and that human interaction is needed.

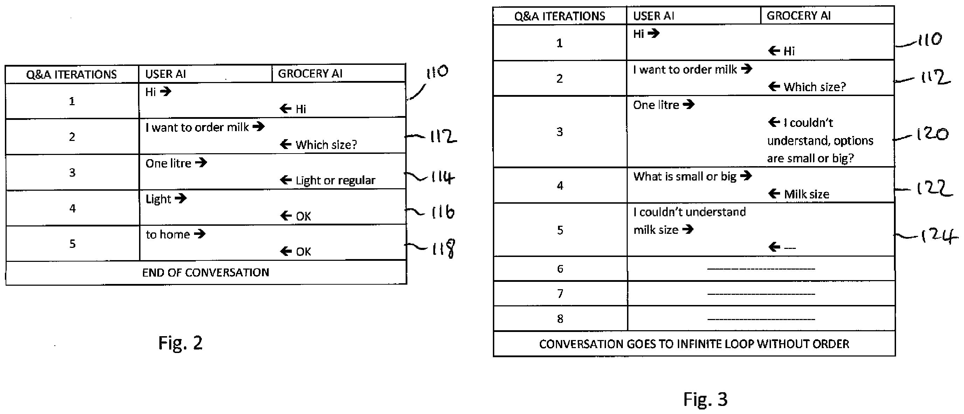

Figure 2 shows a number of steps in a correctly functioning AI to AI conversation. As can be seen, the conversation is between a user AI, such as an integrated system within a refrigerator and a grocery AI which is arranged to interact with user Als upon request.

At step 110, the user AI initiates the conversation and the grocery AI responds. At step 112, the user indicates that it wants to order milk and the grocery responds by querying which size is requested. At step 114, the user provides an indication of the requested size and the grocery responds by enquiring as to what type of milk is requested. At step 116, an indication is provided by the user that light milk is required. The grocery AI acknowledges this and finally at step 118 the user AI indicates that delivery is requested to the user's home. The conversation has operated completely according to the user's desires and the goal has been achieved in that the user's request for one litre of light milk has been correctly received and processed at the grocery which will therefore in due course arrange delivery as would normally happen.

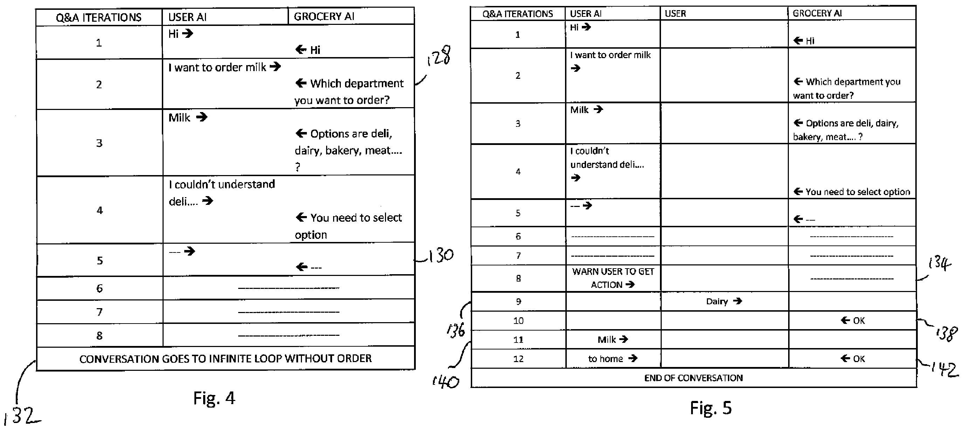

Figures 3 and 4 show examples in which conversations between two AI systems can get locked which would culminate in no order successfully being placed at the grocery and therefore the user not ending up with the desired groceries.

In Figure 3, steps 110 and 112 are the same as in Figure 2. However at step 3, the grocery respond by indicating that it cannot understand the requested size. The grocery AI was arranged to understand the size options as small or big, whereas the user AI has given a specific size of one litre.

At step 122 it can be seen that the conversation has become somewhat circular in that the grocery AI is providing a technically correct, but as far as the context of the conversation goes, a rather meaningless response. At step 124, the conversation has finally completely broken down.

The conversation finishes in an infinite loop without order as indicated at 126.

Figure 4 shows a further example of an AI to AI conversation with a similar eventual breakdown even though the precise statements in the conversation are different. In this case, the grocery enquires at step 128 which department the user would like to order from and the user responds with an option which does not exist in the grocery's index. Thus, at 130 the conversation has broken down and again at 132, it enters into an infinite loop culminating in no order of a grocery.

Figure 5 shows an exemplary sequence of conversation according to a non-limiting embodiment of the present invention. In this case, Q & A iterations 1 to 3 are the same as in the conversation of Figure 4. However once the conversation has reached Q & A iteration 5, a threshold has been reached in terms of the number of iterations which prompts, at step 134 a warning to a user to intervene. The user then at step 136 intervenes into the conversation and communicates with the other system (in this case the grocery AI system, although it could be a human being rather than a second AI system) indicating that the department that is to be accessed is the dairy department.

The grocery AI at step 138 now indicates an acknowledgement and understanding of this and steps 140 and 142 can be carried out from the user AI. As mentioned above, in one alternative, the user himself could continue the conversation at this stage. In any event, at step 134, a warning is sent to a user which can then be used by the user as a prompt to intervene in the conversation which will culminate in ensuring that the user's grocery orders are correctly received.

In the example of Figure 5, the step that triggered the warning to the user was based on a determination that a number of Q & A iterations have been passed, beyond a threshold. In the example shown, five Q & A iterations actually took place and the infinite loop was entered. Once steps 6 and 7 had passed, the threshold was passed such that the alarm was generated.

The alarm could be generated in a number of possible ways. In one example, a notification could be sent to a user's mobile telephone or email account. Programs such as WhatsApp, Telegram, SMS or any other such social media could be used to communicate with a user to indicate to them that interaction with an AI to AI conversation is needed.

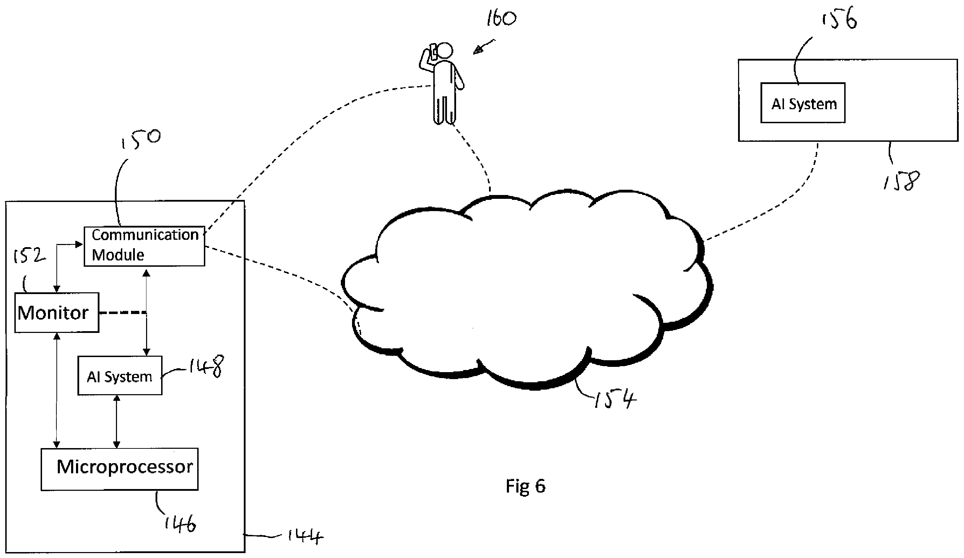

Figure 6 is a schematic representation of a control system for managing an AI to AI conversation. The control system 144 comprises a microprocessor 146 in communication with an AI system 148. The AI system is in communication with a communication module 150. A monitor 152 is provided which is in communication with both the communication module 150 and the microprocessor 146. The monitor 142 is shown monitoring the output from the AI system 148 to the communication module which is one, non-limiting way, by which the communications from the AI system and therefore the contributions of the AI system to the conversation can be monitored. Of course, in some embodiments, the monitor could simply be provided by hardware integrated with the microprocessor 146. The system 144 is shown in communication with a communications network 154 such as the internet.

A second system, which in this case is a second AI system 156, is provided at a third party 158 which could, typically, be a retailer such as a grocery store. The system operates, as described above, in that the communication from the AI system 148 at the first AI system 144 is monitored by the monitor 152. This detects the communications between the two AI systems 148 and 156 and is therefore able to monitor one or more factors associated with the AI communication. For example, it could be used to count the number of iterations within a conversation, or it could be used to monitor other parameters, such as the duration of a conversation, the delay between individual iterations or messages or any other such factor within AI communication.

When the monitor 152 determines that a situation has developed such that the communication has entered an infinite loop or failed in any other possible way, a signal will be sent directly from the monitor to the communication module 150 which is able, via the network 154, to communicate directly to a human user 160. Thus, the user 160 is then able to intervene in the communication between the two AI systems, 148 and 156.

The precise configuration of the hardware shown schematically in Figure 6 could be varied, but the functionality will be understood with the benefit of reference to the description of Figures 1 to 5 above.

In a preferred example, the system 144 is integrated into a refrigerator and the monitor includes the ability to notice when certain foods or drinks are running low and then send a signal to the microprocessor 146 and subsequently to the AI system 148 to trigger a communication to AI system 156 via the internet 154. Such monitors 152 could include optical detectors, weight detectors or any other such suitable hardware.

Embodiments of the present invention have been described with particular reference to the examples illustrated. However, it will be appreciated that variations and modifications may be made to the examples described within the scope of the present invention.

## Claims

1. A method of controlling an interaction between the two parties, at least one of which is an AI party, the method comprising:
setting a threshold level for a predetermined factor relating to interaction between the two parties;
during the interaction, monitoring the predetermined factor;
and, when the threshold for the predetermined factor is exceeded, triggering an alarm for a human user.

2. A method according to claim 1, in which the predetermined factor is the number of iterations in the conversation.

3. A method according to claim 1 or 2, in which the human user is notified by the sending of a notification to the user.

4. A method according to claim 3, in which the notification is a message sent via a user's mobile telephone.

5. A method according to claim 4, in which a social media App is used for communication with the user's mobile telephone.

6. A method according to any of claims 3 to 5, in which the notification includes an invitation to the user to participate in the interaction with one of the AI parties.

7. A method according to any of claims 2 to 6, in which the threshold number of iterations is determined based on a constant value added to an error.

8. A method according to claim 7, in which the constant value is 5 and the error is 2, such that the threshold is set to 7 iterations.

9. An AI control system, comprising a processor arranged to monitor communications between a first system and a second system, wherein one or both of the systems is an AI system, wherein the processor is arranged, during the interaction, to monitor a predetermined factor relating to interaction between the two parties; and
trigger an alarm for a human user when the threshold for the predetermined factor is exceeded

10. An AI control system according to claim 9, in which the predetermined factor relating to interaction between the two parties is the number of iterations in the conversation between the parties and in which the processor is arranged to trigger the alarm when the number of iterations exceeds the threshold.

11. An AI control system, according to claim 10, comprising a communication module arranged upon receipt of instruction from the processor to send a notification to a user.

12. An AI system according to claim 11, in which the communication module comprises a mobile telephone or internet based communication module configured automatically to send a message via a social media App to alert a user to required intervention.

13. An AI system according to any of claims 9 to 12, in which the alarm includes an invitation to the user to participate in the interaction with one of the AI parties

14. An AI system according to any of claims 9 to 13, in which the predetermined factor is the number of iterations in a conversation between the parties and the threshold number of iterations is determined based on a constant value added to an error.

15. A refrigerator, comprising integrated therein an AI control system according to any of claims 9 to 14, arranged to communicate with an AI system at a third party such as a food retailer.
